# EUROPÄISCHE PATENTSCHRIFT

(11) **EP 0 876 564 B1**
(45) Veröffentlichungstag und Bekanntmachung des Hinweises auf die Patenterteilung: **14.08.2002**
(21) Anmeldenummer: 97907010.9
(22) Anmeldetag: 21.01.1997
(51) Int. Cl.: F16L 41/02, F16L 41/03, F16L 39/00

(54) **ROHRVERBINDER**
PIPE CONNECTING DEVICE
RACCORD DE TUYAUX

(30) Priorität: 24.01.1996 DE 19602377
(43) Veröffentlichungstag der Anmeldung: 11.11.1998
(73) Patentinhaber: Hage Fittings Gmbh & Co. Kg, 63110 Rodgau (DE)
(72) Erfinder: SPIEGEL, Herbert, D-97464 Niederwerrn (DE); BÖHM, Robert, D-97453 Schonungen (DE)
(74) Vertreter: Rehmann, Klaus-Thorsten, Dipl.-Ing.
(86) Internationale Anmeldenummer: DE9700108
(87) Internationale Veröffentlichungsnummer: WO9727417

(56) Entgegenhaltungen:
- BE-A- 534 832
- DE-A- 3 908 699
- FR-A- 2 293 652
- US-A- 3 307 205

## Beschreibung

Die Erfindung betrifft einen Rohrverbinder zum Verbinden von mindestens drei Rohrleitungen, insbesondere Wasserleitungen mit einem darin angeordneten, vorzugsweise an der inneren Wandung anliegenden inneren Rohr, der aus einem in Strömungsrichtung durchgängigen Grundrohr und mindestens einem hierzu abzweigend ausgebildeten Stutzen besteht, wobei ein dem Grundrohr und der Abzweigung folgendes inneres Rohr vorgesehen ist und wobei das Grundrohr und das innere Rohr in deuselben Stutzen abzweigend geführt sind. Ein solcher Rohrverbinder wird im allgemeinen Sprachgebrauch auch Fitting genannt.

Rohrleitungen mit innenliegendem Rohr, werden beispielsweise verwendet, wenn in einem Wohn- oder Geschäftshaus ein Warmwassersystem installiert werden soll, bei dem das Wasser innerhalb der Zuleitung zirkulieren kann, um nach Öffnen der Zapfstelle möglichst schnell Warmwasser zur Verfügung zu haben. Ein solches System ist beispielsweise in der EP 0 674 137 A1 offenbart. In dieser Druckschrift wird eine Warmwasserversorgungsanlage mit einer Warmwasserringleitung beschrieben, die durch einen Wassererhitzer verläuft und in der das Wasser in Zirkulationsleitungen mit wesentlich geringerem Querschnitt zirkuliert.

Die Zirkulationsleitung kann aus flexiblem Material bestehen, also im einfachsten Fall ein in die Wasserleitung eingeschobener Kunststoffschlauch sein oder aber fest an der inneren Wandung der äußeren Rohrleitung anliegen bzw. an ihr befestigt sein.

Ein ähnliches System ist in der DE 35 42 374 A1 offenbart. In diesem System werden als Rohrverbinder T-Stücke verwendet, über die nicht nur die äußeren Rohre miteinander verbunden werden können, sondern auch die inneren. Die Verbindung erfolgt jeweils über Muffen. In die die in Strömungsrichtung des Fluids an den Rohrverbinder angebundenen Rohrleitungen eingesteckt werden. Die Verbindung der Zirkulationsleitungen im Fitting erfolgt durch Verkleben oder Aufschrumpfen. Hierzu ist im Inneren ebenfalls ein T-Stück vorgesehen, das entsprechend dem äußeren Rohrverlauf verzweigt ist und das über einen Steg im Abzweigstutzen befestigt ist. Eine absolut starre Fixierung des inneren T-Stücks ist nicht möglich, weil durch weitere Stege der Rohrquerschnitt im Fitting stark verengt würde. Die Verbindung der Zirkulationsleitung mit dem inneren T-Stück ist deshalb recht kompliziert, insbesondere weil das innere T-Stück keine definierte Lage innerhalb des Fittings einnimmt. An der Verbindungsstelle wird deshalb auch bewußt in Kauf genommen, daß diese im Inneren nicht absolut dicht ist. Zwar spielen Wasserverluste an der Verbindungsstelle nur eine untergeordnete Rolle, da das Wasser ja zurückgeführt wird, dennoch geht erhitztes Wasser "verloren", wodurch der Wirkungsgrad des Systems sinkt. Außerdem ist durch die komplizierte Befestigung die Montagezeit recht hoch.

Von dieser Problemstellung ausgehend soll ein Rohrverbinder so fortgebildet werden, daß eine einfache Montage des Wasserversorgungssystems möglich und eine dichte Verbindung der inneren Zirkulationsleitung herstellbar ist.

Zur Problemlösung zeichnet sich der eingangs erläuterte Rohrverbinder dadurch aus, daß das innere Rohr an der Innenwandung so anliegt, daß es sich in der Draufsicht auf den Stutzen und bezogen auf die Strömungsrichtung äußerst rechts oder äußerst links befindet.

Durch diese Ausbildung ist für die Zirkulationsleitung im Rohrverbinder eine definierte Anschlußmöglichkeit gegeben. Durch die Anbindung an die Innenwandung ist das Verbindungsstück für die Zirkulationsleitung starr, wodurch eine sichere und dichte Verbindung erfolgen kann.

Vorzugsweise steht das innere Rohr an den Verbindungsstelle nach innen zurück. Dies ist insbesondere dann vorteilhaft, wenn die anzuschließende Rohrleitung eine flexible Zirkulationsleitung aufweist, die an den Enden aus der Rohrleitung herausgeführt ist und dann an den Rohrverbinder herangeführt werden kann. Dabei ist es unbeachtlich, wie und ob die Zirkulationsleitung mit der Rohrleitung verbunden ist. Sofern diese ebenfalls an der Innenwandung angebunden ist, muß die Anbindung so ausgeführt sein, daß sie an der Anschlußstelle getrennt werden kann, um beispielsweise die Leitung von äußerst rechts nach äußerst links oder umgekehrt zu verlegen.

Wenn ein Mehrzahl von in unterschiedliche Richtungen führende Abzweigstutzen vorgesehen sind, können auch andere Verbindungen und Vielfachverzweigungen innerhalb eines Rohrleitungssystems durchgeführt werden. Neben einem T-Verbinder ist folglich insbesondere ein Kreuz-Verbinder vorstellbar.

Vorzugsweise ist das innere Rohr mit der Innenwandung des Rohrverbinders verschweißt oder verlötet.

Zur Ausbildung des inneren Rohres kann ein exzentrisch angeordneter, an seinen beiden Enden mit der Innenwandung verbundener Steg vorgesehen sein, so daß der Rohrverbinder in zwei Kammern geteilt wird.

Eine besonders einfache Herstellung des Rohrverbinders ist gegeben, wenn das innere Rohr durch Aufbohren eines an der Innenwandung angegossenen Wulstes gebildet wird. Zur Erzeugung des inneren Abzweigstutzens sind bei einem T-Stück oder Kreuz-Verbinder dann nur zwei senkrecht zueinander ausgeführte Bohrungen notwendig, die parallel zur Außenwandung verlaufen. Die Größe des Rohrquerschnitts wird bestimmt durch die Breite des angegossenen Wulstes.

Zur Verringerung der Wandstärke und Ausbildung von Anschlägen sowohl für die Verbindung der äußeren Rohrleitung als auch der inneren Rohrleitung sind in dem Rohrverbinder die Enden an den Verbindungsstellen vorzugsweise nach innen abgedreht ausgebildet.

Mit Hilfe einer Zeichnung sollen Ausführungsbeispiele der Erfindung nachfolgend näher erläutert werden. Es zeigt:
- Figur 1a -: einen als T-Stück ausgebildeten Rohrverbinder in der Seitenansicht;
- Figur 1b -: die Draufsicht auf einen Rohrverbinder gemäß Sichtpfeil I nach Figur 1a;
- Figur 1c -: die Ansicht des Rohrverbinders gemäß Sichtpfeil II nach Figur 1a;
- Figur 2a -: einen Längsschnitt durch den Rohrverbinder nach Figur 1a;
- Figur 2b -: die Draufsicht auf den Rohrverbinder gemäß Sichtpfeil P nach Figur 2a;
- Figur 3a -: die Seitenansicht eines weiteren Ausführungsbeispiels;
- Figur 3b -: die Draufsicht auf das T-Stück gemäß Sichtpfeil VII nach Figur 3a;
- Figur 3c -: die Ansicht des T-Stücks gemäß Sichtpfeil VIII nach Figur 3a;
- Figur 4a -: die Seitenansicht einer gerade verlaufenden Rohrleitung;
- Figur 4aa -: die Draufsicht auf die Rohrleitung nach Figur 4a;
- Figur 4b -: die Seitenansicht auf ein weiteres Ausführungsbeispiel einer gerade verlaufenden Rohrleitung;
- Figur 4bb -: die Draufsicht auf die Rohrleitung nach Figur 4b;
- Figur 5a -: einen als Kreuzfitting ausgebildeten Rohrverbinder in der Seitenansicht;
- Figur 5b -: die Draufsicht auf den Rohrverbinder gemäß Sichtpfeil III nach Figur 5a;
- Figur 5c -: die Ansicht des Rohrverbinders gemäß Sichtpfeil IV nach Figur 5a;
- Figur 6a -: das Endstück eines Fittings mit Verdrehsicherung im Längsschnitt;
- Figur 6b -: das entsprechende Ende eines Rohres mit Verdrehsicherung;
- Figur 6c -: die Draufsicht auf das Ende gemäß Figur 6a;
- Figur 6d -: die Draufsicht auf das Rohrende gemäß Figur 6b;
- Figur 7a-: einen weiteren als Kreuzfitting ausgebildeten Rohrverbinder in der Seitenansicht;
- Figur 7b -: die Draufsicht auf den Rohrverbinder gemäß Sichtpfeil V nach Figur 7a;
- Figur 7c -: die Ansicht des Rohrverbinders gemäß Sichtpfeil VI nach Figur 7a.

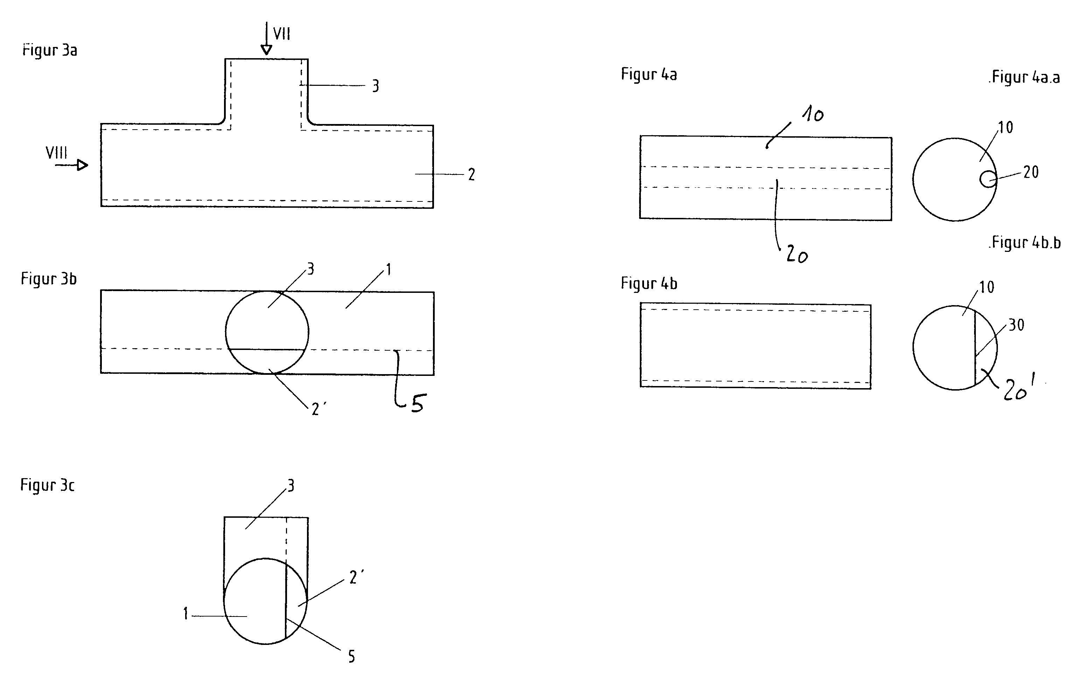

Das Grundprinzip der Rohrleitungen, die mit dem Rohrverbinder verbunden werden sollen, zeigen die Figuren 4.

Das äußere Rohr 10 weist einen viel größeren Querschnitt auf als das innere Rohr 20, das exzentrisch zum äußeren Rohr 10 verläuft, an der Innenwand des äußeren Rohres 10 anliegt und mit dieser fest verbunden sein kann. Die Länge der Rohre 10, 20 ist beliebig und so zu wählen, daß ein Leitungssystem sinnvoll installiert werden kann. Das innere Rohr 20 kann mit dem äußeren Rohr 10 verschweißt oder verlötet sein. Ebenso ist es möglich, eine Verbindung über einen hier nicht näher dargestellten Steg zu erzielen. Ebenso ist es denkbar, die Ausbildung des inneren Rohres 20' dadurch zu erzielen, daß im Rohr 10 ein Steg 30 ausgebildet ist, wie in Figuren 4b und 4bb zeigen. Dieser Steg 30 schließt an seinen beiden Enden dicht mit dem äußeren Rohr 10 ab, so daß innerhalb des Rohres 10 zwei Kammern ausgebildet werden.

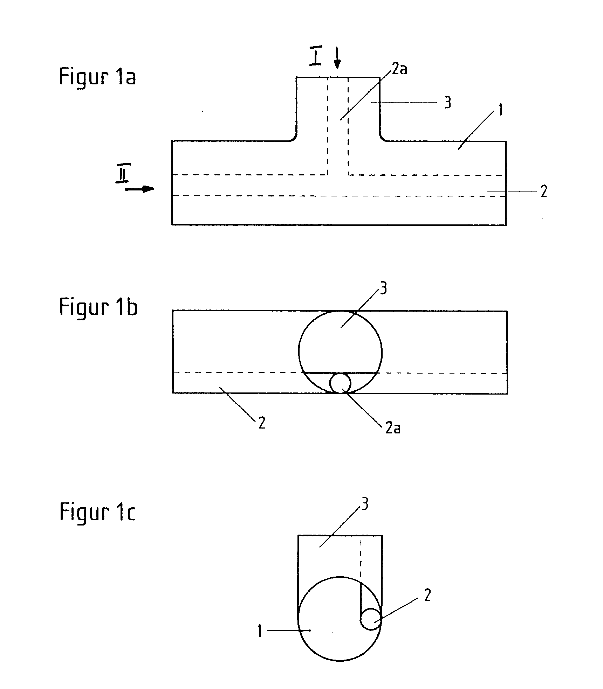

Die Figuren 1 bis 3 zeigen einen als T-Stück ausgebildeten Rohrverbinder, der Verwendung finden kann, wenn von einer Steigleitung einzelne Leitungen zu den hier nicht näher dargestellten Zapfstellen geführt werden sollen. Der Rohrverbinder besteht aus dem in Strömungsrichtung F verlaufenden Grundrohr 1 mit dem senkrecht hiervon abzweigenden Stutzen 3. Das innere Rohr 2 folgt dem Grundrohr 1 und dem Stutzen 3 entsprechend, so daß im Stutzen 3 ein inneres Rohr 2a ausgebildet ist.

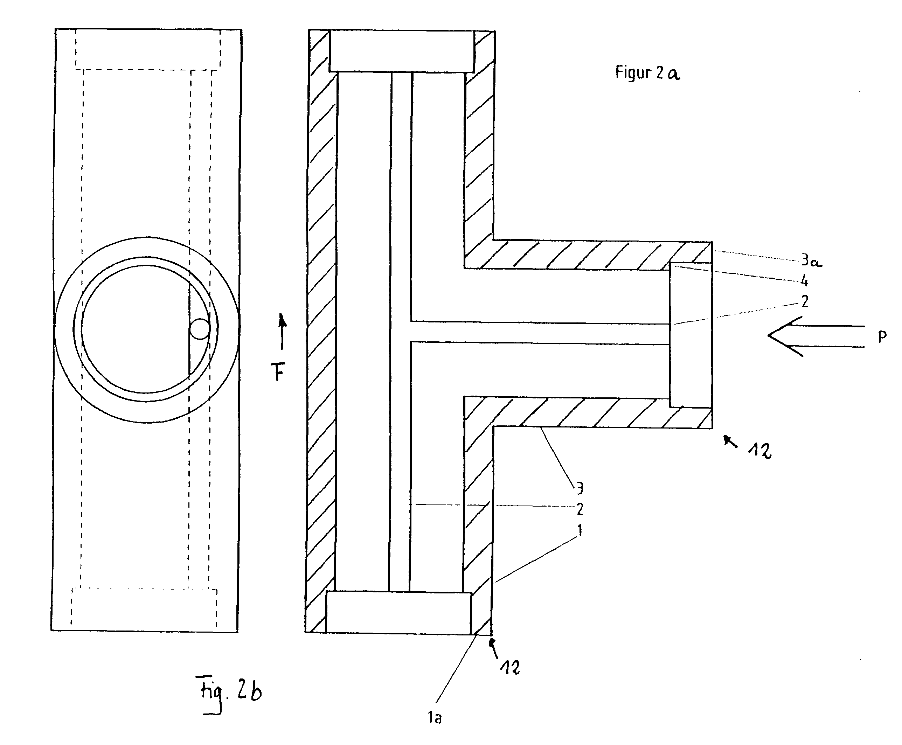

Im Grundrohr 1 und im Stutzen 3 liegt das innere Rohr 2, 2a an der Innenwandung an und ist mit dieser starr verbunden. Die Anordnung des inneren Rohres 2, 2a ist derart, daß es sich in Draufsicht (Sichtpfeil P) auf den Stutzen 3 und bezogen auf die Strömungsgrichtung F äußerst rechts (Darstellung in Figur 2) oder äußerst links, also diametral hierzu, befindet.

Um einen Anschlag für die Rohrleitungen 10, 20 auszubilden, sind die Enden des Grundrohres 1 und des Stutzens 3 nach innen abgedreht, so daß sich eine im Bereich der Abdrehung geringere Wandstärke 1a, 3a und Absätze 4 einstellen, gegen die die Rohre 10, 20 dann anschlagen können. Eine Befestigung der Rohre 10 mit dem Rohrverbinder kann in herkömmlicher Weise über eine Klemmverschraubung oder dergleichen erfolgen.

Das innere Rohr 2 kann aus dem Rohrverbinder auch herausragen. Entsprechend sind dann die Enden der Rohrleitungen 10, 20 auszubilden.

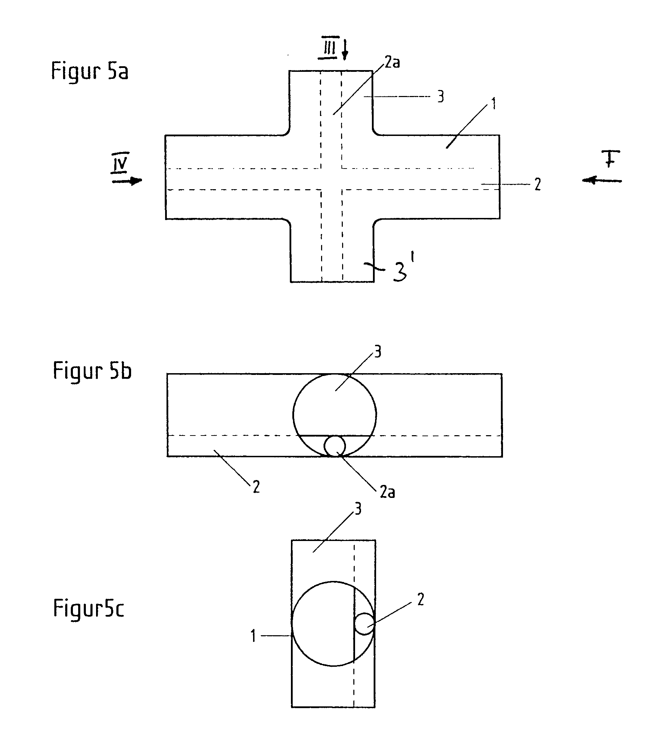

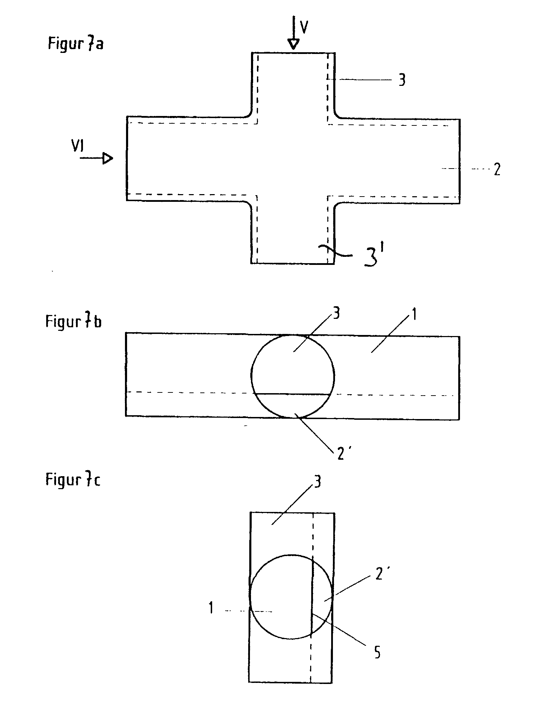

Ein weiteres Ausführungsbeispiel eines Rohrverbinders zeigen die Figuren 5 und 7. Der Rohverbinder ist hier als Kreuzfitting ausgebildet und weist einen weiteren, dem Stutzen 3 gegenüberliegenden Stutzen 3' auf.

Durch einen Steg 5, der, wie Figuren 3c oder 7c zeigen, in das Grundrohr 1 bzw. den Stutzen 3 bzw. 3' so eingezogen ist, daß seine beiden Enden an der inneren Wandung dicht anliegen, kann im Rohrverbinder anstatt eines inneren Rohres 2 eine Kammer 2' ausgebildet werden, die als Zirkulationsleitung dient. Diese Ausbildung wird dann gewählt, wenn die mit dem Rohrverbinder zu verbindenden Leitungen entsprechend ausgebildet sind (Figur 4b).

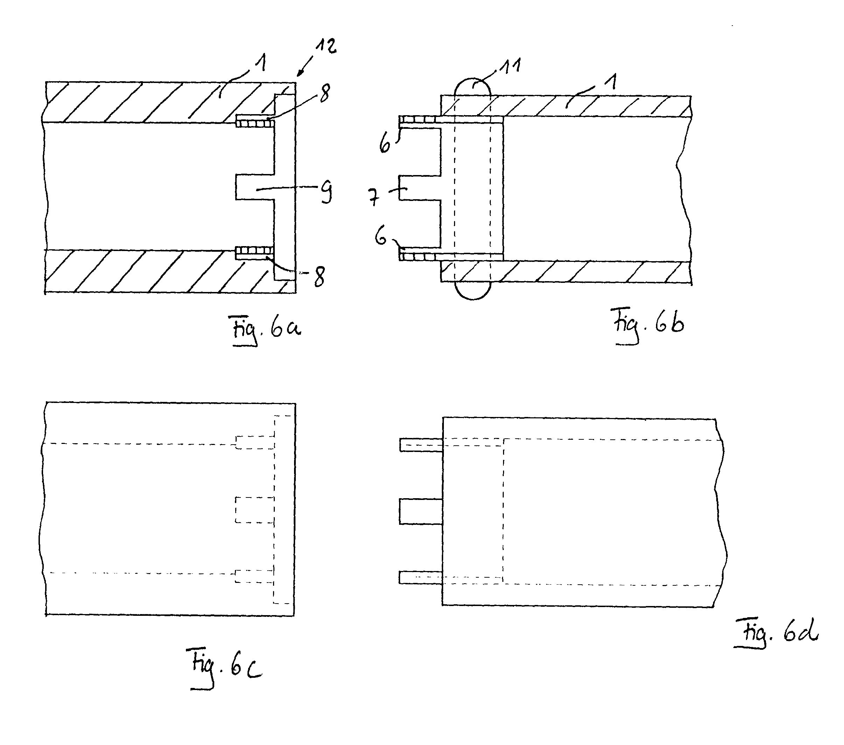

Eine verdrehsichere Verbindung einzelner Rohrsegmente miteinander ist möglich, wenn das eine Rohrende mit Nasen 6,7 und das andere mit entsprechend ausgestalteten Nuten 8,9 ausgebildet ist, die ineinandergreifen können. Entsprechend ist der Rohrverbinder an seinen Enden 12 mit vorzugsweise einer Vielzahl über den Umfang verteilten Nuten 8,9 versehen. Nachdem das Rohr mit den Nasen 6,7 in die Nuten 8,9 eingesteckt worden ist, erfolgt eine Verschraubung über den Klemmring 11, der in Figur 6b schematisch dargestellt ist. Die Klemmverbindung erfolgt auf herkömmliche Art und Weise, so daß es hierzu keiner tiefergehenden Erläuterung bedarf.

Re/he

### Bezugszeichenliste

- 1: Grundrohr
- 1a: Wandung
- 2: inneres Rohr
- 2': Kammer
- 3: Stutzen
- 3a: Wandung
- 3': Stutzen
- 4: Anschlag
- 5: Steg
- 6: Nase
- 7: Nase
- 8: Nut
- 9: Nut
- 10: äußeres Rohr
- 11: Klemmring
- 12: Ende
- 20: inneres Rohr
- 20': Kammer
- 30: Steg
- F: Strömungsrichtung
- P: Sichtpfeil

## Patentansprüche

1. Rohrverbinder zum Verbinden von mindestens drei Rohrleitungen, insbesondere Wasserleitungen mit einem darin angeordneten, vorzugsweise an der inneren Wandung anliegenden Rohr, bestehend aus einem in Strömungsrichtung (F) durchgängigen Grundrohr (1) und mindestens einem hierzu abzweigend ausgebildeten Stutzen (3), wobei ein dem Grundrohr (1) und der Abzweigung folgendes inneres Rohr (2) vorgesehen ist, wobei das Grundrohr (1) und das innere Rohr (2) in denselben Stutzen (3) abzweigend geführt sind, **dadurch gekennzeichnet, daß** das innere Rohr (2) an der Innenwand von Grundrohr (1) und Stutzen (3) so anliegt, dass es sich in der Draufsicht auf den Stutzen (3) und bezogen auf die Strömungsrichtung (F) äußerst rechts oder äußerst links befindet.

2. Rohrverbinder nach Anspruch 1, **dadurch gekennzeichnet, daß** das innere Rohr (2) an den Verbindungsstellen nach innen zurücksteht.

3. Rohrverbinder nach Anspruch 1, **dadurch gekennzeichnet, daß** das ein Mehrzahl von in unterschiedlichen Richtungen führende Abzweigstutzen (3, 3') vorgesehen sind.

4. Rohrverbinder nach einem der vorstehenden Ansprüche, **dadurch gekennzeichnet, daß** das innere Rohr (2) mit dem Grundrohr (1) und dem Stutzen (3) verschweißt oder verlötet ist.

5. Rohrverbinder nach einem oder mehreren der vorstehenden Ansprüche, **dadurch gekennzeichnet, daß** zur Ausbildung des inneren Rohres (2) ein exzentrisch angeordneter, an seinen beiden Enden mit der Innenwandung des Grundrohres (1) und Stutzens (3, 3') verbundener Steg (5) vorgesehen ist.

6. Rohrverbinder nach einem oder mehreren der vorstehenden Ansprüche, **gekennzeichnet durch** mindenstens eine innenliegende Nut (8,9) zur drehsicheren Verbindung mit einem Rohr.

7. Verfahren zur Herstellung eines Rohrverbinders nach einem der vorhergehenden Ansprüche, **dadurch gekennzeichnet, daß** das innere Rohr (2) durch Aufbohren eines an der inneren Wandung angegossenen Wulstes gebildet wird.

8. Verfahren nach Anspruch 7, **dadurch gekennzeichnet, daß** die Enden an den Verbindungsstellen nach innen abgedreht sind, zur Verringerung der Wandstärke (1a, 3a) und Ausbildung von Anschlägen (4).

## Claims

1. Pipe connector for connecting at least three conduits, in particular water conduits containing a pipe, which preferably lies adjacent to the inner wall, comprising a main through-pipe (1) in flow direction (F) and at least one pipe socket (3) constructed so as to branch off from the latter, wherein an inner pipe (2) following the main pipe (1) and the branch is provided, wherein the main pipe (1) and the inner pipe (2) are run so as to branch into the same pipe socket (3), **characterized in that** the inner pipe (2) lies against the inner wall of main pipe (1) and pipe socket (3) in such a way as to be situated, in plan view of the pipe socket (3) and with reference to the flow direction (F), on the extreme right or the extreme left.

2. Pipe connector according to claim 1, **characterized in that** the inner pipe (2) is set back in an inward direction at the junction points.

3. Pipe connector according to claim 1, **characterized in that** a plurality of branch sockets (3, 3') leading in different directions are provided.

4. Pipe connector according to one of the preceding claims, **characterized in that** the inner pipe (2) is welded or soldered to the main pipe (1) and the pipe socket (3).

5. Pipe connector according to one or more of the preceding claims, **characterized in that,** to form the inner pipe (2), an eccentrically disposed web (5) is provided, which is connected at both its ends to the inner wall of the main pipe (1) and of the pipe socket (3, 3').

6. Pipe connector according to one or more of the preceding claims, **characterized by** at least one internal groove (8, 9) for anti-rotation connection to a pipe.

7. Method of manufacturing a pipe connector according to one of the preceding claims, **characterized in that** the inner pipe (2) is formed by boring open a bead integrally cast on the inner wall.

8. Method according to claim 7, **characterized in that** the ends at the junction points are turned internally in order to reduce the wall thickness (1a, 3a) and to form stops (4).

## Revendications

1. Raccord de tuyaux pour relier au moins trois conduites tubulaires, en particulier conduites d'eau, comprenant un tube agencé à l'intérieur, de préférence adjacent à la paroi intérieure, le raccord étant constitué d'un tube de base (1) traversant dans la direction d'écoulement (F) et d'au moins un branchement (3) réalisé en dérivation par rapport au tube de base, raccord dans lequel il est prévu un tube intérieur (2) suivant le tube de base (1) et la dérivation, le tube de base (1) et le tube intérieur (2) étant guidés en dérivation dans le même branchement (3), **caractérisé en ce que** le tube intérieur (2) est adjacent à la paroi intérieure du tube de base (1) et du branchement (3) de telle manière qu'en vue de dessus sur le branchement (3) il se trouve le plus à droite possible ou le plus à gauche possible par rapport à la direction d'écoulement (F) .

2. Raccord de tuyaux selon la revendication 1, **caractérisé en ce qu'**aux points de raccordement le tube intérieur (2) est en retrait vers l'intérieur.

3. Raccord de tuyaux selon la revendication 1, **caractérisé en ce qu'**il est prévu plusieurs branchements de dérivation (3,3') conduisant dans des directions différentes.

4. Raccord de tuyaux selon l'une des revendications précédentes, **caractérisé en ce que** le tube intérieur (2) est soudé ou brasé avec le tube de base (1) et avec le branchement (3).

5. Raccord de tuyaux selon l'une ou plusieurs des revendications précédentes, **caractérisé en ce qu'**il est prévu pour la réalisation du tube intérieur (2) une cloison (5) disposée excentrée, reliée à ses deux extrémités avec la paroi intérieure du tube de base (1) et du branchement (3,3').

6. Raccord de tuyaux selon l'une ou plusieurs des revendications précédentes, **caractérisé par** au moins une rainure (8,9) s'étendant à l'intérieur pour une liaison immobilisée en rotation avec un tuyau.

7. Procédé pour la fabrication d'un raccord de tuyaux selon l'une des revendications précédentes, **caractérisé en ce que** le tube intérieur (2) est formé en alésant un bourrelet moulé d'un seul tenant sur la paroi intérieure.

8. Procédé selon la revendication 7, **caractérisé en ce qu'**aux points de raccordement, les extrémités sont réduites vers l'intérieur par tournage, pour réduire l'épaisseur de paroi (1a,3a) et former des butées (4).
